# EUROPEAN PATENT SPECIFICATION

(11) **EP 2 688 930 B1**
(45) Date of publication and mention of the grant of the patent: **04.03.2015**
(21) Application number: 12710700.1
(22) Date of filing: 20.03.2012
(51) Int. Cl.: C08G 18/08, C08G 18/66, C09D 175/06

(54) **AQUEOUS POLYESTER-POLYURETHANE DISPERSION NOT REQUIRING ORGANIC CO-SOLVENTS**
WÄSSRIGE POLYESTER-POLYURETHAN-DISPERSION OHNE NOTWENDIGKEIT VON ORGANISCHEN CO-LÖSUNGSMITTELN
DISPERSION AQUEUSE DE POLYESTER-POLYURÉTHANE NE NÉCESSITANT PAS DE CO-SOLVANTS ORGANIQUES

(30) Priority: 21.03.2011 EP 11159020
(43) Date of publication of application: 29.01.2014
(73) Proprietor: Bayer Intellectual Property GmbH, 40789 Monheim am Rhein (DE)
(72) Inventor: SCHRINNER, Marc, Claudius, 201507 Caojing, Shanghai (CN); GEWIß, Heinz-Dietmar, 40668 Meerbusch (DE); KLIPPERT, Uwe, 51399 Burscheid (DE); HEBESTREIT, Tanja, 51688 Wipperfürth (DE); MELCHIORS, Martin, 42799 Leichlingen (DE)
(74) Representative: BIP Patents
(86) International application number: PCT/EP2012/054915
(87) International publication number: WO 2012/126911

(56) References cited:
- EP-A1- 2 216 352
- US-A- 5 280 062
- US-A- 5 693 703

## Description

The present invention relates to an aqueous polyester-polyurethane dispersion comprising a polyester resin as the reaction product of a polyester polyol, dimethylol butyric acid and a HDI based polyisocyanate. The invention further relates to a process for the production of these polyesters and to their use.

In recent years, against the background of increasingly stringent environmental legislation, water-dispersible urethanized polyesters have become increasingly important for a variety of application areas. Today they are especially used as a component of high quality water-dilutable two-component polyurethane lacquers (2C or 2K PUR lacquers).

It is known that water-based binders which have a relatively high solids content and contain little or no organic auxiliary solvent can be produced by using internal or external nonionic emulsifiers. Since these emulsifiers remain in the film even after curing, they can adversely affect the properties of the coatings, including their resistance to water, detergents and weathering.

Another problem of nonionic emulsions of the type in question is their generally poor stability, for example, to shear stressing during the production of lacquers, such that they tend to coagulate. In addition, it is not possible to obtain high-gloss coatings from these products.

The water-dilutability of polymers can also be obtained by chemically incorporated, base-neutralized acid groups, more particularly carboxyl groups, or by chemically incorporated acid-neutralized tertiary amino groups. During the curing of coatings containing such binders the films become insoluble in water through dissociation of the hydrophilic salt groups and evaporation of the volatile neutralizing agents. However, depending on the type of neutralizing agent used and the hardening conditions, large quantities of neutralizing agent may remain in the film.

If the majority of neutralizing agent remains in the film, the resulting hydrophilic salt groups represent potential points of attack, for example for moisture, such that the quality of the coatings can be adversely affected. By contrast, evaporation of an amine in relatively large quantities results in environmental concerns, especially when relatively large quantities of volatile, organic auxiliary solvents are also used.

To reduce environmental pollution, expensive absorption or incineration plants are necessary.

For these reasons, there is a need for water-based coating compositions which contain very little organic solvent and, in addition, only require a small quantity of volatile neutralizing agents.

In addition, a water-based coating composition is expected to have a high solids content in water. This is desirable for energy-saving reasons, for example, reduced transport costs and a relatively low heat demand for evaporating the water during the curing of the binders. In addition, more favorable application or film properties, including greater layer thicknesses, can be obtained. Dry film thicknesses of 50 to 70 µm are generally difficult to achieve with water-based binders because there is a pronounced tendency towards the formation of boiling-induced bubbles, craters and other film defects. These defects are normally eliminated or reduced by the addition of volatile high-boiling solvents, organic auxiliary solvents or similar additives, although their addition makes the binders less environmentally acceptable.

Water-based binders are also expected to provide high resistance to hydrolysis and storage although this is not always the case, particularly with low-solvent binders.

Highly flexible coatings find use in many fields of application, for example, in industrial coatings, in automotive non-chip coatings and fillers, for crack-covering coatings, etc. Newly developed binders should enable highly flexible coatings to be produced, whether in combination with cross-linking resins or as a flexibilizing additive to existing binder compositions having insufficient flexibility.

In this respect, US 5,280,062 describes to aqueous polyesters for high-solids stoving coatings which contain a) 35,0 to 65,0% by weight of a polyester resin containing urethane, carboxyl and hydroxyl groups and containing the reaction product of 77 to 89% by weight of a branched polyester polyol having a hydroxyl number of 125 to 175, an acid number of less than 4 and a molecular weight of 2500 to 6500, 2) 2,5 to 4,5% by weight of a 2,2-bis-(hydroxymethyl)alkane carboxylic acid, 3) 0 to 3,5% by weight of a diol component having a molecular weight of 62 to 250 and 4) 9 to 19% by weight of a diisocyanate component, wherein the percentages of a1), a2), a3) and a4) add up to 100%, based on the weight of a1), a2), a3) and a4), b) 0,1 to 1,5% by weight of a basic neutralizing agent which is sufficient to convert 35 to 100% of the carboxyl groups of component a) to carboxylate groups, c) 0 to 7,5% by weight of an organic auxiliary solvent and d) 26 to 64.9% by weight water, wherein the percentages of a), b), c) and d) add up to 100%, based on the weight of a), b), c) and d).

At least some aqueous polyesters that are described in US 5,280,062 still require the use of an organic auxiliary solvent, in particular N-methyl-2-pyrrolidone (NMP).

Another example for the auxiliary use of organic solvents is given in US 2004/204559 A1 which relates to solvent-borne polyurethane resins with a high carbonate group content that are dilutable in water, to aqueous coating compositions prepared thereof, to a process for preparing them and to their use. The water-dilutable polyurethane resin is obtained by reacting at least one polycarbonate polyol with a number average molecular weight of from 400 to 6000 g/mole with at least one compound containing at least two isocyanate-reactive groups and at least one group capable of forming anions and one or more polyisocyanates.

Optional reaction components are a polyester polyol which is different from the aforementioned polyol with a number-average molecular weight of 400 to 6000 g/mol, a low molecular weight compound containing two or more hydroxy and/or amino groups having a molecular weight of 60 to 400 g/mole and a compound which is monofunctional in terms of reaction with isocyanate groups or which contains active hydrogen atoms differing in reactivity, these units being located at the end of the polymer chain.

The resulting polyurethane resin is reported as containing from 5,8% to 20,0% by weight of incorporated carbonate groups -O(C=O)O- and is present in a solvent which is inert towards isocyanate groups.

Due to environmental concerns as outlined above, it would be desirable to eliminate the need of organic solvents for such binder dispersions. The present invention therefore has the object of providing an aqueous polyester-polyurethane dispersion which can be dispersed in water having a solids content high enough for practical use without the presence of organic auxiliary solvents.

According to the invention this object is achieved by an aqueous polyester-polyurethane dispersion comprising:
a) a polyester resin comprising carboxyl and hydroxyl groups and which comprises the reaction product of:
   aa) a polyester polyol comprising the reaction product of:
      aa1) at least one diol;
      aa2) at least one triol;
      aa3) at least one dicarboxylic acid and/or tricarboxylic acid and/or their anhydrides, the dicarboxylic acid not being succinic acid;
      aa4) succinic acid;
   bb) dimethylol butyric acid;
   cc) a polyisocyanate component comprising ≥ 50 mole-% hexamethylene diisocyanate;
b) a basic neutralizing agent; and
c) water.

It has been found that by using succinic acid in the formation of the polyester polyol and dimethylol butyric acid in the formation of the polyester-polyurethane no further organic cosolvents such as NMP are necessary to form stable and useful aqueous polymer dispersions.

The dispersions can be used as binders in 2 component PUR systems. The viscosity of the dispersions at 23 °C, determined by means of a Brookfield rotational viscosimeter, is preferably from ≥ 10 mPa s to ≤ 30000 mPa s, more preferred from ≥ 50 mPa s to ≤ 10000 mPa s and most preferred from ≥ 500 mPa s to ≤ 8000 mPa s.

The pH value (ISO 976) of the dispersions is preferably from ≥ 5 to ≤ 10 and more preferred from ≥ 6 to ≤ 9 and the solids content is preferably ≥ 30 weight-% to ≤ 65 weight-%, preferably ≥ 33 weight-% to ≤ 48 weight-%.

With respect to the formation of the polyester resin a), other diisocyanate components which may be present besides hexamethylene diisocyanate include 1-isocyanato-3,3,5-trimethyl-5-isocyanatomethyl cyclohexane (isophorone diisocyanate or IPDI), perhydro-2,4'- and -4,4'-diphenyl methane diisocyanate and 2,4- and 2,6-toluene diisocyanate. However, it is preferred that 100 mole-% of component cc) is hexamethylene diisocyanate, particularly 1,6-hexamethylene diisocyanate (HDI). Furthermore, it is preferred that the equivalent ratio of isocyanate groups of component cc) to hydroxyl groups of components aa) and bb) is ≥ 0,35:1 to ≤ 0,8:1.

The branched polyester polyols aa) may be obtained in a known manner from the above-mentioned starting materials. The reaction may take place in the presence of known esterification catalysts, preferably in the melt or with azeotropic condensation at a temperature of 140 °C to 240 °C with the elimination of water. The reaction may be conducted under vacuum. When components aa1) to aa4) are subjected to azeotropic esterification, the entraining agent (e.g., isooctane, xylene, toluene or cyclohexane) is distilled off under vacuum on completion of the reaction.

Examples for the at least one diol aa1) include ethylene glycol, 1,2- and 1,3-propylene glycol, 1,3-, 1,4- and 2,3-butane diol, 1,6-hexane diol, 2,5-hexane diol, trimethylhexane diol, diethylene glycol, triethylene glycol, hydrogenated bisphenols, 1,4-cyclohexane diol, 1,4-cyclohexane dimethanol, neopentyl glycol and/or trimethylpentane diol.

Examples for the at least one triol aa2) include trimethylol propane and/or glycerol.

Examples for at least one dicarboxylic acid and/or tricarboxylic acid and/or their anhydrides aa3) include phthalic acid, phthalic acid anhydride, isophthalic acid, terephthalic acid, tetrahydrophthalic acid, tetrahydrophthalic acid anhydride, hexahydrophthalic acid, hexahydrophthalic acid anhydride, maleic acid, maleic acid anhydride, fumaric acid, adipic acid, sebacic acid, azelaic acid and/or benzenetricarboxylic acid.

Suitable basic neutralizing agents b) include ammonia, triethyl amine, triethanolamine, dimethyl ethanolamine, monoethanolamine, diethanolamine, N-methyldiethanol amine, morpholine, N-methyl morpholine, 2-amino-2-methyl-1-propanol and mixtures of these bases. Dimethyl ethanolamine, N-methyl morpholine, methyl diethanol amine and ammonia are preferred. Alkali metal hydroxides, such as sodium or potassium hydroxide, may also be used, but are less preferred.

The present invention will be further described in connection with exemplary embodiments. The embodiments may be combined freely unless the context clearly indicates the contrary.

In an embodiment of the dispersion according to the invention the polyester polyol aa) comprises the reaction product of:
aa1) 1,6-hexane diol, neopentyl glycol and/or 1,4-cyclohexane dimethanol;
aa2) trimethylol propane and/or glycerol;
aa3) isophthalic acid, phthalic anhydride and/or hexahydrophthalic anhydride;
aa4) succinic acid.

In another embodiment of the dispersion according to the invention the dispersion does not comprise an organic auxiliary solvent. Specific examples of such substances that are not part of the dispersion include acetone and N-methyl-2-pyrrolidone.

In another embodiment of the dispersion according to the invention the polyester resin a) has an acid number of ≤ 22, a hydroxyl number of ≥ 40 mg KOH/g to ≤ 110 mg KOH/g, a weight average molecular weight M_{w} of ≥ 8000 g/mole to ≤ 50000 g/mole and a urethane group content (-NH-C(O)-O-) of ≥ 6,5 weight-% to ≤ 11 weight-%.

The acid number (given in mg KOH/g) of the polyester resin a) may be determined according to DIN 3682. Preferably, the acid number is ≤ 20. The hydroxyl number (OH number) may be determined according to DIN 53240 part 2. Preferably, the hydroxyl number is ≥ 60 mg KOH/g to ≤ 10 mg KOH/g. The weight average molecular weight of polyester resin a) may be determined according to DIN 55672/1 or DIN 55672/2 and is preferably ≥ 10000 g/mole to ≤ 29000 g/mole Lastly, the urethane group content is preferably ≥ 7 weight-% to ≤ 10,3 weight-% and more preferred ≥ 7,0 weight-% to ≤ 8,5 weight-%.

In another embodiment of the dispersion according to the invention the polyester polyol aa) is a branched polyester polyol with an acid number of ≤ 4, a hydroxyl number of ≥ 125 mg KOH/g to ≤ 175 mg KOH/g and a weight average molecular weight M_{w} of ≥ 2500 g/mole to ≤ 6500 g/mole.

The acid number (given in mg KOH/g) of the polyester polyol aa) may be determined according to DIN 3682. Preferably, the acid number is ≤ 2,2. The hydroxyl number (OH number) may be determined according to DIN 53240 part 2. Preferably, the hydroxyl number is ≥ 140 mg KOH/g to ≤ 165 mg KOH/g. The weight average molecular weight of polyester polyol aa) may be determined according to DIN 55672/1 or DIN 55672/2 and is preferably ≥ 3500 g/mole to ≤ 5000 g/mole.

In another embodiment of the dispersion according to the invention the components a), b) and c) are present in the following amounts, the percentages of a), b) and c) adding up to ≤ 100 weight-%, based on the weight of a), b) and c):
a) ≥ 35 weight-% to ≤ 65 weight-%, preferably ≥ 40 weight-% to ≤ 50 weight-%;
b) ≥ 0,1 weight-% to ≤ 1,5 weight-%, preferably ≥ 0,5 weight-% to ≤ 1 weight-%;
c) ≥ 26 weight-% to ≤ 64,9 weight-%, preferably ≥ 50 weight-% to ≤ 59,5 weight-%.

In another embodiment of the dispersion according to the invention the components aa), bb) and cc) are present in the following amounts, the percentages of aa), bb) and cc) adding up to ≤ 100 weight-%, based on the weight of aa), bb) and cc):
aa) ≥ 77 weight-% to ≤ 89 weight-%, preferably ≥ 80 weight-% to ≤ 86 weight-%;
bb) ≥ 2,5 weight-% to ≤ 4,5 weight-%, preferably ≥ 4 weight-% to ≤ 4,4 weight-%;
cc) ≥ 9 weight-% to ≤ 19 weight-%, preferably ≥ 10 weight-% to ≤ 14 weight-%.

In another embodiment of the dispersion according to the invention the components aa1), aa2), aa3) and aa4) are present in the following amounts, the percentages of aa1), aa2), aa3 and aa4) adding up to ≤ 100 mole-%, based on aa1), aa2), aa3) and aa4):
aa1) ≥ 40 mole-% to ≤ 48 mole-%, preferably ≥ 42 mole-% to ≤ 46 mole-%;
aa2) ≥ 8 mole-% to ≤ 16 mole-%, preferably ≥ 12 mole-% to ≤ 14 mole-%;
aa3) ≥ 26 mole-% to ≤ 39 mole-%, preferably ≥ 32 mole-% to ≤ 36 mole-%;
aa4) ≥ 8 mole-% to ≤ 14 mole-%, preferably ≥ 10 mole-% to ≤ 12 mole-%.

Another aspect of the present invention is a method for the production of a dispersion according to the invention comprising the step of reacting the polyester polyol aa), dimethylol butyric acid bb) and the polyisocyanate component cc) in the presence of a urethanization catalyst, followed by the steps of adding the basic neutralizing agent b) and adding water c).

The polyester resin a) may be produced by mixing the polyester polyol, dimethylol butyric acid and polyisocyanate and then heating the reaction mixture until no more NCO groups are present.

The reaction is carried out in the presence of suitable catalysts, e.g., dibutyl tin oxide, tin (II)-octoate, tin(II)-ethylhexanoate, dibutyl tin dilaurate or tertiary amines such as triethyl amine, which are generally added in quantities of 0,005 to 1% by weight, based on the weight of the reaction mixture as a whole. To additionally increase the rate, the reaction may also be carried out under pressure at relatively high temperatures. The reaction may be carried out without using solvents or in inert solvents, such as acetone or methyl ethyl ketone, at solids contents of 40 to 96% by weight.

After the urethanization reaction, the basic neutralizing agent b) may be added in a quantity of 0,1 to 1,5% by weight, preferably 0,5 to 1% by weight, based on the weight of the aqueous polyester.

Suitable basic neutralizing agents b) include ammonia, triethyl amine, triethanolamine, dimethyl ethanolamine, monoethanolamine, triisopropyl amine, diethanolamine, N-methyldiethanol amine, morpholine, N-methyl morpholine, 2-amino-2-methyl-1-propanol and mixtures of these bases. Dimethyl ethanolamine, N-methyl morpholine, methyl diethanol amine and ammonia are preferred. Alkali metal hydroxides, such as sodium or potassium hydroxide, may also be used, but are less preferred.

A neutralizing agent need not be added when a tertiary amine, such as triethyl amine, has been used as the catalyst for the isocyanate addition reaction, because this catalyst can also act as a neutralizing agent, provided that it is used in the proper quantity.

Water (preferably deionized) as component c), is added to the polyester resin to form the aqueous polyester dispersion. The organic solvent may be partly or completely distilled off, optionally under vacuum. The quantity of water used is preferably selected so that the resulting aqueous polyester has a solids content of ≥ 30 weight-% to ≤ 65 weight-%, preferably of ≥ 33 weight-% to ≤ 48 weight-%. The water used may also be partly distilled off to obtain as high a solids content as possible.

Preferably, the production is undertaken in the absence of an organic co-solvent. Specific examples of such substances that are not used in production include acetone and N-methyl-2-pyrrolidone.

The present invention further relates to the use of a dispersion according to the invention for the manufacture of two-component coating binders.

In the use according to the invention it is preferred that the coating binder does not comprise an organic auxiliary solvent. Specific examples of such substances that are not part of the coating precursor include acetone and N-methyl-2-pyrrolidone.

A further aspect of the present invention is an aqueous stoving lacquer having a solids content of ≥ 50 weight-% and comprising:
A) ≥ 60 weight-% to ≤ 95 weight-% (preferably ≥ 70 weight-% to ≤ 85 weight-%) of the dispersion according to the invention;
B) ≥ 5 weight-% to ≤ 40 weight-% (preferably ≥ 150 weight-% to ≤ 35 weight-%) of at least one hydroxy-reactive cross-linking resin;
C) ≥ 0 weight-% to ≤ 180 weight-% (preferably ≥ 10 weight-% to ≤ 120 weight-%), based on the solids content of A) and B), of auxiliaries and additives;
wherein the percentages of A) and B) are based on solids and add up to ≤ 100 weight-%, based on the weight of A) and B).

Applications for the stoving lacquers according to the invention include stoving filler coatings and wet-on-wet non-chip primers of the type used in automotive coatings. The coatings according to the invention may also be used for coating plastic, film, metal, wood and mineral substrates. They are also suitable as high-solids one-coat finishing coatings on optionally pretreated substrates.

The stoving coatings according to the invention may contain the auxiliaries and additives known from lacquer technology as further described below and may be applied to the substrate to be coated by methods known per se, such as spray coating, flood coating, casting, dip coating, roll coating, spread coating.

The stoving lacquers according to the invention possess prolonged stability in storage both at room temperature and at moderately elevated temperatures of up to 50 °C and may be cured at temperatures above 100 °C, preferably at temperatures above 110 °C, to form cross-linked films having excellent properties.

The dispersion A) according to the invention may be combined with water-dilutable or water-dispersible OH-reactive cross-linking agents. However, hydrophobic substances which are not dispersible in water on their own may also be used as the cross-linking resins because the polyester binders containing hydroxyl and carboxylate groups can perform the function of an emulsifier for the cross-linking resins.

Suitable cross-linking resins B) include melamine-formaldehyde or urea-formaldehyde condensates of the type described, for example, in D. H. Solomon, The Chemistry of Organic Filmformers, pages 235 et seq., John Wiley & Sons, Inc., New York, 1967. However, the melamine resins may also be completely or partly replaced by other crosslinking amino resins of the type described, for example, in "Methoden der organischen Chemie" (Houben-Weyl), Vol. 14/2, Part 2, 4th Edition, Georg Thieme Verlag, Stuttgart 1963, pages 319 et seq.

Other suitable cross-linking resins are blocked polyisocyanates based on, for example, isophorone diisocyanate, hexamethylene diisocyanate, 1,4-diisocyanatocyclohexane, bis-(4-isocyanatocyclohexyl)-methane, 1,3-diisocyanatobenzene, 1,4-diisocyanatobenzene, 2,4-diisocyanato-1-methyl benzene, 1,3-diisocyanato-2-methyl benzene, 1,3-bis-isocyanatomethyl benzene, 2,4-bis-isocyanatomethyl-1,5-dimethyl benzene, bis-(4-isocyanatophenyl)-propane, tris-(4-isocyanatophenyl)methane and trimethyl-1,6-dilsocyanatohexane.

Also suitable are blocked polyisocyanates adducts such as biuret polyisocyanates based on 1,6-diisocyanatohexane; isocyanurate polyisocyanates based on 1,6-diisocyanatohexane; or urethane-modified polyisocyanate adducts prepared from 2,4-and/or 2,6-diisocyanatotoluene or isophorone diisocyanate and low molecular weight polyhydroxyl compounds (such as trimethylol propane, the isomeric propane diols or butane diols or mixtures of such polyhydroxyl compounds), wherein the isocyanate groups of the polyisocyanate adduct are blocked.

Suitable blocking agents for these polyisocyanates include monohydric alcohols such as methanol, ethanol, butanol, hexanol and benzyl alcohol; oximes such as acetoxime and methyl ethyl ketoxime; lactams such as .epsilon.-caprolactam; phenols; and CH-acidic compounds such as diethyl malonate.

The optional auxiliaries and additives C) include pigments (such as titanium dioxide, iron oxide, lead oxide and zinc oxide), fillers (such as alkaline earth metal silicates, carbon black, which may also act as a filler, talcum and graphite), organic dyes, flow control agents, foam inhibitors, UV absorbers, anti-sedimenting agents, thickeners, wetting agents, antioxidants, anti-skinning agents and cross-linking catalysts.

In the coating compositions according to the invention, component A) may be present in combination with other hydroxy-functional polymers D) in an amount, based on solids, of up to 400% by weight of the quantity of component a) present in component A). When component D) is present, the amount of component B), based on solids, preferably is 5 to 50% by weight, based on the weight of component a) present in component A) and component D).

Examples of hydroxy-functional polymers D) include those described in DE-OS No. 2,528,212, DE-OS 2,556,621 and EP-A No. 0,218,906.

In an embodiment of the stoving lacquer according to the invention the stoving lacquer does not comprise an organic auxiliary solvent. Specific examples of such substances that are not part of the stoving lacquer include acetone and N-methyl-2-pyrrolidone.

In a further embodiment of the stoving lacquer according to the invention the hydroxy-reactive cross-linking resin comprises one or more water-dilutable or water-dispersible melamine-formaldehyde condensate. Preferred cross-linking resins are melamine and urea resins, more preferably alkylated melamine/ formaldehyde resins containing 1 to 8 carbon atoms in the alkyl chain, such as butylated, methylated and/or methoxymethylated melamine resins.

The present invention will be further described with reference to the following examples without wishing to be limited by them.

### Examples according to the convention

### Example 1

A polyester was prepared with the following components:

| Polyester I | Amount [g] | Weight-% |
|---|---|---|
| Phthalic anhydride | 276 | 6.90 |
| Succinic acid | 439 | 10.98 |
| Isophthalic acid | 1546 | 38.65 |
| Trimethylol propane | 484 | 12.10 |
| 1,6-Hexane diol | 1758 | 43.95 |
| Subtotal: | 4503 | 112.58 |
| | | |
| - Water | 503 | 12.58 |
| | | |
| Total: | 4000 | 100.00 |

| Polyester II | Amount [g] | Weight-% |
|---|---|---|
| Phthalic anhydride | 276 | 8.50 |
| Succinic acid | 439 | 9.45 |
| Isophthalic acid | 1546 | 34.65 |
| Trimethylol propane | 484 | 18.03 |
| 1,6-Hexane diol | 1758 | 39.50 |
| Subtotal: | 4503 | 110.13 |
| | | |
| - Water | 503 | 10.13 |
| | | |
| Total: | 4000 | 100.00 |

| Polyester III | Amount [g] | Weight-% |
|---|---|---|
| Phthalic anhydride | 276 | 5.50 |
| Succinic acid | 439 | 9.47 |
| Isophthalic acid | 1546 | 43.15 |
| Trimethylol propane | 484 | 14.23 |
| 1,6-Hexane diol | 1758 | 45.45 |
| Subtotal: | 4503 | 117.80 |
| | | |
| - Water | 503 | 17.80 |
| | | |
| Total: | 4000 | 100.00 |

The components were introduced into a reaction vessel with a distillation column attached and heated to 140 °C over the course of one hour under a nitrogen atmosphere (5-6 1 N₂). After having reached 140 °C the temperature was raised to 170 °C over three hours (10 °C/h) and subsequently to 220 °C over ten hours (5 °C/h). The temperature was kept at 220 °C until an acid number of < 2,5 was observed in the reaction mixture.

### Example 2

A polyester-polyurethane dispersion as of the convention was prepared with the following components:

| | Amount [g] | Weight-% |
|---|---|---|
| Part I | | |
| Polyester I according to example 1 | 1270.0 | 84.67 |
| Dimethylol butyric acid | 66.0 | 4.40 |
| Tin(II)-ethylhesanoate | 1.9 | 0.125 |
| | | |
| Part II | | |
| Hexamethylene diisocyanate | 164.0 | 10.93 |
| | | |
| Part III | | |
| Dimethylethanolamine | 39.6 | |
| | | |
| Part IV | | |
| Water | 1698.0 | (to achieve 45 weight-% solids in the dispersion) |

Example as state of the art

### Example 3

| Polyester IV | Amount [g] | Weight-% |
|---|---|---|
| Phthalic anhydride | 1.3 | 6.54 |
| Adipic acid | 2.6 | 10.35 |
| Isophthalic acid | 7.5 | 37.65 |
| Trimethylol propane | 2.4 | 9.51 |
| 1,6-Hexane diol | 8.5 | 42.98 |
| Subtotal: | 22.3 | 107.03 |
| | | |
| - Water | 2.3 | 7.03 |
| | | |
| Total: | 20.0 | 100,00 |

| Polyester V | Amount [g] | Weight-% |
|---|---|---|
| Plithalic anhydride | 2.8 | 6.7 |
| Adipic acid | 5.6 | 11.45 |
| Isophthalic acid | 15.9 | 39.1 |
| Trimethylol propane | 6.7 | 10.2 |
| 1,6-Hexane diol | 18.1 | 43.5 |
| Subtotal: | 49.1 | 110.95 |
| | | |
| - Water | 5.1 | 10.95 |
| | | |
| Total: | 44.0 | 100,00 |

| Polyester VI | Amount [g] | Weight-% |
|---|---|---|
| Phthalic anhydride | 2.5 | 5.9 |
| Adipic acid | 4.9 | 10.2 |
| Isophthalic acid | 13.5 | 37.3 |
| Trimethylol propane | 6.2 | 9.7 |
| 1,6-Hexane diol | 16.4 | 41.7 |
| Subtotal: | 41.5 | 104.8 |
| | | |
| - Water | 4.5 | 4.8 |
| | | |
| Total: | 38.0 | 100,00 |

### Example 4

A polyester-polyurethane dispersion as state of the art was prepared with the following components:

| | Amount [g] | Weight-% |
|---|---|---|
| Part I | | |
| Polyester IV according to example 3 | 1170.0 | 64.54 |
| Dimethylol propionic acid | 120.0 | 6.61 |
| Tin(II)-ethylhexanoate | 3.8 | 0.07 |
| | | |
| Part II | | |
| Hexamethylene diisocyanate | 480.0 | 26.48 |
| | | |
| Part III | | |
| Dimethylethanolamine | 39.0 | |
| | | |
| Part IV | | |
| Water | 2270.0 | (to achieve 44.4 weight-% solids in the dispersion) |

The components of part I were introduced into a reaction vessel, heated to 130 °C and kept at this temperature for 30 minutes. The mixture was then cooled to 80 °C and HDI (part II) was added. The subsequent reaction was carried out at 130 °C for 2 hours. After another cooling to 80 °C DMEA (part III) was added and the mixture was stirred for 30 minutes. Finally, water (part IV) was added and the mixture was stirred at 70 °C for 2 hours.

Comparison of a system regarding to the convention (example 2) against a system state of the art (example 4). In the test experiment a 2 K PUR coating based on a polyol dispersion above were taken and the resistance against the following substances were tested (table 1). For the test equipment a coating on plastic surface were applied. On this surface a pressure of 2 N were applied with an Erichsen-stick. The evaluation showed, that the system with the polyol dispersion regarding to the convention (example 2) are showing better results than the system with the standard polyol.

**Table 1: Application data for using a '2 N' Erichsen-stick during scratch test**

| | System regarding to the convention (example 2) | System as state of the art (example 4) |
|---|---|---|
| Superbenzin | 1 | 1 |
| MPA | 1 | 2 |
| Xylol | 1 | 1 |
| Ethylacetat | 1 | 4 |

| | | |
|---|---|---|
| Meaning of the numbers: 0 = best value.....5 = worst value | | |

## Claims

1. An aqueous polyester-polyurethane dispersion comprising:
a) a polyester resin comprising carboxyl and hydroxyl groups and which comprises the reaction product of:
aa) a polyester polyol comprising the reaction product of:
aa1) at least one diol;
aa2) at least one triol;
aa3) at least one dicarboxylic acid and/or tricarboxylic acid and/or their anhydrides, the dicarboxylic acid not being succinic acid;
aa4) succinic acid;
bb) dimethylol butyric acid;
cc) a polyisocyanate component comprising ≥ 50 mole-% hexamethylene diisocyanate;
b) a basic neutralizing agent; and
c) water.

2. The dispersion according to claim 1, wherein the polyester polyol aa) comprises the reaction product of:
aa1) 1,6-hexane diol, neopentyl glycol and/or 1,4-cyclohexane dimethanol;
aa2) trimethylol propane and/or glycerol;
aa3) isophthalic acid, phthalic anhydride and/or hexahydrophthalic anhydride;
aa4) succinic acid.

3. The dispersion according to claim 1, wherein the dispersion does not comprise an organic auxiliary solvent.

4. The dispersion according to claim 1, wherein the polyester resin a) has an acid number of ≤ 22, a hydroxyl number of ≥ 40 mg KOH/g to ≤ 110 mg KOH/g, a weight average molecular weight M_{w} of ≥ 8000 g/mole to ≤ 50000 g/mole and a urethane group content (-NH-C(O)-O-) of ≥ 6,5 weight-% to ≤ 11 weight-%.

5. The dispersion according to claim 1, wherein the polyester polyol aa) is a branched polyester polyol with an acid number of ≤ 4, a hydroxyl number of ≥ 125 mg KOH/g to ≤ 175 mg KOH/g and a weight average molecular weight M_{w} of ≥ 2500 g/mole to ≤ 6500 g/mole.

6. The dispersion according to claim 1, wherein the components a), b) and c) are present in the following amounts, the percentages of a), b) and c) adding up to ≤ 100 weight-%, based on the weight of a), b) and c):
a) ≥ 35 weight-% to ≤ 65 weight-%
b) ≥ 0,1 weight-% to ≤ 1,5 weight-%
c) ≥ 26 weight-% to ≤ 64,9 weight-%.

7. The dispersion according to claim 1, wherein the components aa), bb) and cc) are present in the following amounts, the percentages of aa), bb) and cc) adding up to ≤ 100 weight-%, based on the weight of aa), bb) and cc):
aa) ≥ 77 weight-% to ≤ 89 weight-%
bb) ≥ 2,5 weight-% to ≤ 4,5 weight-%
cc) ≥ 9 weight-% to ≤ 19 weight-%.

8. The dispersion according to claim 1, wherein the components aa1), aa2), aa3) and aa4) are present in the following amounts, the percentages of aa1), aa2), aa3 and aa4) adding up to ≤ 100 mole-%, based on aa1), aa2), aa3) and aa4):
aa1) ≥ 40 mole-% to ≤ 48 mole-%
aa2) ≥ 8 mole-% to ≤ 16 mole-%
aa3) ≥ 26 mole-% to ≤ 39 mole-%
aa4) ≥ 8 mole-% to ≤ 14 mole-%.

9. A method for the production of a dispersion according to one or more of claims 1-8, comprising the step of reacting the polyester polyol aa), dimethylol butyric acid bb) and the polyisocyanate component cc) in the presence of a urethanization catalyst, followed by the steps of adding the basic neutralizing agent b) and adding water c).

10. The method according to claim 9, wherein the production is undertaken in the absence of an organic co-solvent.

11. A use of a dispersion according to one or more of claims 1-8 for the manufacture of two-component coating binders.

12. The use according to claim 11, wherein the coating binder does not comprise an organic auxiliary solvent.

13. An aqueous stoving lacquer having a solids content of ≥ 50 weight-% and comprising:
A) ≥ 60 weight-% to ≤ 95 weight-% of the dispersion according to one or more of claims 1-7;
B) ≥ 5 weight-% to ≤ 40 weight-% of at least one hydroxy-reactive cross-linking resin;
C) ≥ 0 weight-% to ≤ 180 weight-%, based on the solids content of A) and B), of auxiliaries and additives;
wherein the percentages of A) and B) are based on solids and add up to ≤ 100 weight-%, based on the weight of A) and B).

14. The stoving lacquer according to claim 13, wherein the stoving lacquer does not comprise an organic auxiliary solvent.

15. The stoving lacquer according to claim 13, wherein the hydroxy-reactive cross-linking resin comprises one or more water-dilutable or water-dispersible melamine-formaldehyde condensate.

## Patentansprüche

1. Wässrige Polyesterpolyurethan-Dispersion, umfassend:
a) ein Carboxyl- und Hydroxylgruppen enthaltendes Polyesterharz, das das Reaktionsprodukt von:
aa) einem Polyesterpolyol, umfassend das Reaktionsprodukt von:
aa1) mindestens einem Diol;
aa2) mindestens einem Triol;
aa3) mindestens einer Dicarbonsäure und/oder Tricarbonsäure und/oder mindestens einem ihrer Anhydride, wobei es sich bei der Dicarbonsäure nicht um Bernsteinsäure handelt;
aa4) Bernsteinsäure;
bb) Dimethylolbuttersäure;
cc) einer Polyisocyanatkomponente, die ≥ 50 Mol-% Hexamethylendiisocyanat umfasst;
umfasst;
b) ein basisches Neutralisationsmittel; und
c) Wasser.

2. Dispersion nach Anspruch 1, wobei das Polyesterpolyol aa) das Reaktionsprodukt von:
aa1) 1,6-Hexandiol, Neopentylglykol und/oder 1,4-Cyclohexandimethanol;
aa2) Trimethylpropan und/oder Glycerin;
aa3) Isophthalsäure, Phthalsäureanhydrid und/oder Hexahydrophthalsäureanhydrid;
aa4) Bernsteinsäure
umfasst.

3. Dispersion nach Anspruch 1, wobei die Dispersion kein organisches Hilfslösungsmittel umfasst.

4. Dispersion nach Anspruch 1, wobei das Polyesterharz a) eine Säurezahl ≤ 22, eine Hydroxylzahl von ≥ 40 mg KOH/g bis ≤ 110 mg KOH/g, ein gewichtsmittleres Molekulargewicht M_{w} von ≥ 8000 g/mol bis ≤ 50.000 g/mol und einen Urethangruppengehalt (-NH-C(O)-O-) von ≥ 6,5 Gew.-% bis ≤ 11 Gew.-% aufweist.

5. Dispersion nach Anspruch 1, wobei es sich bei dem Polyesterpolyol aa) um ein verzweigtes Polyesterpolyol mit einer Säurezahl ≤ 4, einer Hydroxylzahl von ≥ 125 mg KOH/g bis ≤ 175 mg KOH/g und einem gewichtsmittleren Molekulargewicht M_{w} von ≥ 2500 g/mol bis ≤ 6500 g/mol handelt.

6. Dispersion nach Anspruch 1, wobei die Komponenten a), b) und c) in den folgenden Mengen vorliegen, wobei sich die Prozentanteile von a), b) und c) zu ≤ 100 Gew.-%, bezogen auf das Gewicht von a), b) und c), summieren:
a) ≥ 35 Gew.-% bis ≤ 65 Gew.-%
b) ≥ 0,1 Gew.-% bis ≤ 1,5 Gew.-%
c) ≥ 26 Gew.-% bis ≤ 64,9 Gew.-%.

7. Dispersion nach Anspruch 1, wobei die Komponenten aa), bb) und cc) in den folgenden Mengen vorliegen, wobei sich die Prozentanteile von aa), bb) und cc) zu ≤ 100 Gew.-%, bezogen auf das Gewicht von aa), bb) und cc), summieren:
aa) ≥ 77 Gew.-% bis ≤ 89 Gew.-%
bb) ≥ 2,5 Gew.-% bis ≤ 4,5 Gew.-%
cc) ≥ 9 Gew.-% bis ≤ 19 Gew.-%.

8. Dispersion nach Anspruch 1, wobei die Komponenten aa1), aa2), aa3) und aa4) in den folgenden Mengen vorliegen, wobei sich die Prozentanteile von aa1), aa2), aa3) und aa4) zu ≤ 100 Mol-%, bezogen auf aa1), aa2), aa3) und aa4), summieren:
aa1) ≥ 40 Mol-% bis ≤ 48 Mol-%
aa2) ≥ 8 Mol-% bis ≤ 16 Mol-%
aa3) ≥ 26 mol-% bis ≤ 39 Mol-%
aa4) ≥ 8 Mol-% bis ≤ 14 Mol-%.

9. Verfahren zur Herstellung der Dispersion nach einem oder mehreren der Ansprüche 1-8, bei dem man das Polyesterpolyol aa), Dimethylolbuttersäure bb) und die Polyisocyanatkomponente cc) in Gegenwart eines Urethanisierungskatalysators umsetzt und danach das basische Neutralisationsmittel b) zugibt und Wasser c) zugibt.

10. Verfahren nach Anspruch 9, bei dem die Herstellung in Abwesenheit eines organischen Cosolvens durchgeführt wird.

11. Verwendung einer Dispersion nach einem oder mehreren der Ansprüche 1-8 zur Herstellung von zweikomponentigen Lackbindemitteln.

12. Verwendung nach Anspruch 11, wobei das Lackbindemittel kein organisches Hilfslösungsmittel umfasst.

13. Wässriger Einbrennlack mit einem Feststoffgehalt ≥ 50 Gew.-%, umfassend:
A) ≥ 60 Gew.-% bis ≤ 95 Gew.-% der Dispersion nach einem oder mehreren der Ansprüche 1-7;
B) ≥ 5 Gew.-% bis ≤ 40 Gew.-% mindestens eines hydroxyreaktiven Vernetzerharzes;
C) ≥ 0 Gew.-% bis ≤ 180 Gew.-%, bezogen auf den Feststoffgehalt von A) und B), Hilfs- und Zusatzstoffe;
wobei sich die Prozentanteile von A) und B) auf Feststoffe beziehen und sich zu ≤ 100 Gew.-%, bezogen auf das Gewicht von A) und B), summieren.

14. Einbrennlack nach Anspruch 13, wobei der Einbrennlack kein organisches Hilfslösungsmittel umfasst.

15. Einbrennlack nach Anspruch 13, wobei das hydroxyreaktive Vernetzerharz ein oder mehrere wasserverdünnbare oder wasserdispergierbare Melamin-Formaldehyd-Kondensate umfasst.

## Revendications

1. Dispersion aqueuse de polyester-polyuréthane comprenant :
a) une résine polyester comprenant des groupes carboxyle et hydroxyle et qui comprend le produit de réaction de :
aa) un polyester polyol comprenant le produit de réaction de :
aa1) au moins un diol ;
aa2) au moins un triol ;
aa3) au moins un acide dicarboxylique et/ou acide tricarboxylique et/ou leurs anhydrides, l'acide dicarboxylique n'étant pas l'acide succinique ;
aa4) l'acide succinique ;
bb) l'acide diméthylol-butyrique ;
cc) un composant de polyisocyanate comprenant ≥ 50 % en moles de diisocyanate d'hexaméthylène ;
b) un agent neutralisant basique ; et
c) de l'eau.

2. Dispersion selon la revendication 1, dans laquelle le polyester polyol aa) comprend le produit de réaction de :
aa1) le 1,6-hexanediol, le néopentylglycol et/ou le 1,4-cyclohexane-diméthanol ;
aa2) le triméthylol-propane et/ou le glycérol ;
aa3) l'acide isophtalique, l'anhydride phtalique et/ou l'anhydride hexahydrophtalique ;
aa4) l'acide succinique.

3. Dispersion selon la revendication 1, la dispersion ne comprenant pas un solvant auxiliaire organique.

4. Dispersion selon la revendication 1, dans laquelle la résine polyester a) a un indice d'acide ≤ 22, un indice d'hydroxyle de ≥ 40 mg KOH/g à ≤ 110 mg KOH/g, un poids moléculaire moyen en poids M_{w} ≥ 8000 g/mole à ≤ 50000 g/mole et une teneur en groupe uréthane (-NH-C(O)-O-) de ≥ 6,5 % en poids à ≤ 11 % en poids.

5. Dispersion selon la revendication 1, dans laquelle le polyester polyol aa) est un polyester polyol ramifié ayant un indice d'acide ≤ 4, un indice d'hydroxyle de ≥ 125 mg KOH/g à ≤ 175 mg KOH/g et un poids moléculaire moyen en poids M_{w} de ≥ 2500 g/mole à ≤ 6500 g/mole.

6. Dispersion selon la revendication 1, dans laquelle les composants a), b) et c) sont présents dans les quantités suivantes, les pourcentages de a), b) et c) représentant jusqu'à ≤ 100 % en poids, sur la base du poids de a), b) et c) :
a) ≥ 35 % en poids à ≤ 65 % en poids
b) ≥ 0,1 % en poids à ≤ 1,5 % en poids
c) ≥ 26 % en poids à ≤ 64,9 % en poids.

7. Dispersion selon la revendication 1, dans laquelle les composants aa), bb) et cc) sont présents dans les quantités suivantes, les pourcentages de aa), bb) et cc) représentant jusqu'à ≤ 100 % en poids, sur la base du poids de aa), bb) et cc) :
aa) ≥ 77 % en poids à ≤ 89 % en poids
bb) ≥ 2,5 % en poids à ≤ 4,5 % en poids
cc) ≥ 9 % en poids à ≤ 19 % en poids.

8. Dispersion selon la revendication 1, dans laquelle les composants aa1), aa2), aa3) et aa4) sont présents dans les quantités suivantes, les pourcentages de aa1), aa2), aa3 et aa4) représentant jusqu'à ≤ 100 % en moles, sur la base de aa1), aa2), aa3) et aa4) :
aa1) 40 % en moles à ≤ 48 % en moles
aa2) ≥ 8 % en moles à ≤ 16 % en moles
aa3) ≥ 26 % en moles à ≤ 39 % en moles
aa4) ≥ 8 % en moles à ≤ 14 % en moles.

9. Procédé de production d'une dispersion selon une ou plusieurs des revendications 1 à 8, comprenant l'étape de réaction du polyester polyol aa), de l'acide diméthylol-butyrique bb) et du composant de polyisocyanate cc) en présence d'un catalyseur d'uréthanisation, suivie par les étapes d'ajout de l'agent neutralisant basique b) et d'ajout d'eau c).

10. Procédé selon la revendication 9, dans lequel la production est conduite en l'absence d'un co-solvant organique.

11. Utilisation d'une dispersion selon une ou plusieurs des revendications 1 à 8 pour la fabrication de liants de revêtement à deux composants.

12. Utilisation selon la revendication 11, dans laquelle le liant de revêtement ne comprend pas un solvant auxiliaire organique.

13. Vernis au four aqueux ayant une teneur en matières solides de ≥ 50 % en poids et comprenant :
A) ≥ 60 % en poids à ≤ 95 % en poids de la dispersion selon une ou plusieurs des revendications 1 à 7 ;
B) ≥ 5 % en poids à ≤ 40 % en poids d'au moins une résine de réticulation réactive par hydroxy ;
C) ≥ 0 % en poids à ≤ 180 % en poids, sur la base de la teneur en matières solides de A) et B), d'auxiliaires et d'additifs ;
dans lequel les pourcentages de A) et B) sont basés sur les matières solides et représentent jusqu'à ≤ 100 % en poids, sur la base du poids de A) et B).

14. Vernis au four selon la revendication 13, le vernis au four ne comprenant pas un solvant auxiliaire organique.

15. Vernis au four selon la revendication 13, dans lequel la résine de réticulation réactive par hydroxy comprend un ou plusieurs condensats de mélamine-formaldéhyde pouvant être dilués ou dispersés dans l'eau.
